# FASCICULE DE BREVET EUROPEEN

(11) **EP 0 506 536 B1**
(45) Date de publication et mention de la délivrance du brevet: **17.05.1995**
(21) Numéro de dépôt: 92400777.6
(22) Date de dépôt: 23.03.1992
(51) Int. Cl.: F42B 10/14, H02K 7/118

(54) **Dispositif de déplacement d'une ailette d'un projectile**
Vorrichtung zum Verschieben der Leitflügel eines Geschosses
Device for moving the wings of a projectile

(30) Priorité: 26.03.1991 FR 9103639
(43) Date de publication de la demande: 30.09.1992
(73) Titulaire: SOCIETE D'APPLICATIONS GENERALES D'ELECTRICITE ET DE MECANIQUE SAGEM, F-75783 Paris Cédex 16 (FR)
(72) Inventeur: Sega, Patrick, F-78600 Maisons Laffitte (FR); Violot, Claude, F-60210 Chaumont en Vexin (FR)
(74) Mandataire: Gorree, Jean-Michel

(56) Documents cités:
- WO-A-88/05898
- DE-A- 2 145 164
- FR-A- 1 505 851
- FR-A- 2 623 898
- GB-A- 1 187 035

## Description

La présente invention concerne des perfectionnements apportés aux dispositifs permettant de déplacer une ailette d'un projectile, comportant :
- des moyens à ressort pour déplacer l'ailette entre une position non fonctionnelle dans laquelle elle est repliée le long du projectile et une position fonctionnelle dans laquelle elle est déployée dans une position de référence, et
- des moyens de motorisation électrique pour faire tourner l'ailette autour d'un axe sensiblement perpendiculaire à la paroi du projectile, entre deux valeurs limites de part et d'autre de ladite position de référence, pour diriger le projectile.

Un dispositif du genre visé par l'invention s'applique notamment à la ,commande des ailettes d'un obus à guidage terminal ; un obus de ce type est équipé, par exemple, de quatre ailettes maintenues repliées contre le corps de l'obus par un fourreau, chaque ailette étant pourvue de son propre dispositif d'actionnement dont le ressort a été armé lors du repliage de l'ailette. Une fois l'obus tiré et en fin de parcours de celui-ci alors qu'il approche de sa cible, le fourreau est éjecté par exemple par des moyens pyrotechniques, ce qui libère les ailettes qui sont alors déployées sous l'action de leurs ressorts respectifs. Une électronique de commande, logée dans l'obus, assure ensuite une orientation appropriée des ailettes pour diriger l'obus sur sa cible.

Compte tenu de l'environnement dans lequel il doit être monté et il doit fonctionner, le dispositif d'actionnement des ailettes doit pouvoir supporter sans défaillance des conditions très sévères.

En effet, le dispositif d'actionnement des ailettes doit rester dans un état de fonctionnement fiable au bout du temps de stockage normalement prévu pour l'obus, soit par exemple dix à quinze ans. De plus, les moyens mis en oeuvre doivent impérativement présenter un poids et un encombrement aussi réduits que possible car le volume disponible au sein de l'obus est très faible. Enfin les éléments utilisés doivent être réalisés et assemblés de manière à supporter sans dommage les contraintes mécaniques très élevées engendrées par l'accélération considérable générée lors du départ de l'obus (accélération axiale et choc radial de plusieurs milliers de g).

Un dispositif du type visé par l'invention est, dans sa conception générale, déjà connu de par la demande de brevet FR-A-2 623 898.

Toutefois, les solutions technologiques qui sont mises en jeu dans ce dispositif connu ne répondent pas aux exigences de la pratique militaire. Notamment, l'emploi d'un moteur à courant continu à collecteur n'est pas satisfaisant pour de nombreuses raisons :
- durant la période de stockage de l'obus, la surface du collecteur en cuivre risque de s'oxyder et de provoquer un fonctionnement défectueux, voire une défaillance, du moteur lorsque l'obus est enfin tiré ;
- le collecteur est, en lui-même, lourd et encombrant et il est nécessaire d'avoir recours à des balais de contact qui accroissent aussi le poids du moteur ;
- le contact glissant balais/collecteur est sujet à dé faillances et est générateur de parasites qui risquent de perturber le fonctionnement correct de l'électro nique embarquée au voisinage.

De plus, le moteur électrique à courant continu à collecteur possède une vitesse de rotation élevée et il est nécessaire de lui adjoindre un réducteur de vitesse à engrenages. Un tel réducteur est coûteux, lourd et encombrant.

En outre, dans ce document antérieur, il est proposé d'utiliser le même moteur électrique pour actionner l'ailette au cours de la phase de déploiement (alors que le couple nécessaire est élevé) et pour orienter angulairement l'ailette afin de diriger l'obus (alors que le couple nécessaire est beaucoup plus faible). Il en résulte que le moteur électrique doit être dimensionné pour les conditions de travail les plus difficiles, ce qui conduit à un moteur encombrant et lourd, surdimensionné pour le travail qui lui incombe lors de l'orientation angulaire de l'ailette.

Le document précité mentionne certes la possibilité d'un recours à un moteur purement mécanique, à ressort, pour le déploiement de l'ailette. Toutefois aucune solution technologique précise n'est proposée à ce sujet, alors qu'une difficulté réside dans la dualité des moyens moteurs agissant sur l'ailette : le ressort; utile pour le déploiement de l'ailette et qui reste en place une fois achevée sa fonction, ne doit pas perturber ultérieurement les oscillations rotatives de l'ailettes communiquées par le moteur électrique pour le contrôle de la trajectoire de l'obus.

Enfin, les engrenages du réducteur de vitesse de rotation interposé entre le moteur électrique et l'ailette doivent présenter un minimum de jeu pour l'obtention d'un fonctionnement précis. Or, la présence de ces jeux perturbe la commande de l'ailette ; en particulier certains modes de commande nécessitent que le moteur imprime à l'ailette des oscillations rapides de très faible amplitude, lesquelles sont "étouffées" par les jeux du réducteur de vitesse.

D'une façon générale, l'agencement du dispositif décrit dans le document considéré ne satisfait pas aux exigences impératives de compacité et de faible poids requis pour l'application envisagée.

L'invention a essentiellement pour but de proposer un dispositif d'actionnement d'ailette qui obvie aux inconvénients ci-dessus exposés et qui, ce faisant, donne mieux satisfaction aux diverses exigences de la pratique.

A ces fins, un dispositif d'actionnement d'ailette du type mentionné au préambule se caractérise essentiellement, étant agencé conformément à l'invention,
- en ce que les moyens de motorisation électrique comprennent un moteur électrique sans collecteur dont le rotor est accouplé directement à l'ailette,
- en ce que les moyens à ressort comprennent un ressort spiral dont les extrémités sont solidarisées, extérieurement, à la paroi d'un carter entourant le dispositif et, intérieurement, au rotor du moteur électrique, ledit ressort étant disposé en bout du rotor et approximativement coaxialement à celui-ci, et
- en ce que les moyens d'accouplement mécanique entre l'extrémité intérieure du ressort et le rotor sont tels que le ressort bandé soit en mesure d'entraîner le rotor en rotation pour provoquer le déplacement de l'ailette entre sa position non fonctionnelle repliée et sa position fonctionnelle dépliée et que, une fois l'ailette dans sa position fonctionnelle de référence, le rotor soit libre, vis à vis du ressort, d'imprimer les déplacements angulaires souhaités à l'ailette.

Avantageusement, dans une réalisation pratique, l'invention se caractérise :
- en ce que le rotor possède un arbre de sortie pour son accouplement à l'ailette,
- en ce que le ressort spiral est enroulé autour de l'arbre du rotor,
- en ce que cet arbre possède une fente diamétrale de réception de l'extrémité intérieure du ressort spiral; et
- en ce que les deux parois en regard définissant cette fente diamétrale présentent chacune deux pentes convergeant, sensiblement en leur milieu, en direction de l'autre paroi à la manière d'un convergent-divergent, l'angle d'inclinaison mutuel des parois opposées correspondant approximativement au débattement angulaire prévu pour l'ailette.

On assure ainsi de façon simple l'indépendance fonctionnelle de l'arbre du moteur électrique, et donc de l'ailette, vis-à-vis du ressort après déploiement de l'ailette.

De préférence, le rotor du moteur est supporté en rotation par des paliers lisses de grand diamètre situés aux deux extrémités dudit rotor ; de tels paliers de grand diamètre entraînent une diminution de la pression de contact sous charge.

La commande en rotation de l'ailette déployée fait appel à des moyens détecteurs de la position angulaire de cette ailette ou, autrement dit, du rotor du moteur, qui sont de préférence du type électromagnétique sans contact situés en juxtaposition au moteur du côté de celui-ci opposé au ressort spiral et qui comprennent un rotor de détecteur calé sur l'arbre du moteur. Pour éviter les influences magnétiques des aimants du rotor sur les moyens détecteurs de position, il est souhaitable que le rotor du moteur comporte, du côté des moyens détecteurs de position, une paroi radiale apte à former un blindage magnétique isolant magnétiquement les moyens détecteurs de position vis-à-vis du moteur électrique.

Le dispositif d'actionnement d'ailette est entièrement contenu dans un carter fermé. La partie du carter entourant les moyens détecteurs de position est constituée en un matériau amagnétique. La partie du carter qui entoure le stator du moteur et le ressort est constituée en un matériau thermiquement bon conducteur et formant radiateur pour le refroidissement du moteur ; la chaleur dégagée par le stator du moteur électrique est donc évacuée, par le radiateur constitué par cette partie du carter, à l'opposé des moyens détecteurs de position dont le fonctionnement ne risque ainsi pas d'être perturbé par la chaleur dégagée par le moteur.

L'invention sera mieux comprise à la lecture de la description détaillée qui suit d'un mode de réalisation préféré donné uniquement à titre d'exemple non limitatif. Dans cette description, on se réfère aux dessins annexés sur lesquels :
- la figure 1 est une vue de côté, avec demi-vue supérieure en coupe diamétrale et demi-vue inférieure extérieure, d'un dispositif d'actionnement d'ailette agencé selon l'invention ;
- la figure 2 est une vue de bout en coupe selon la ligne II-II de la figure 1, montrant l'agencement d'une extrémité (extrémité avant) du dispositif ; et
- la figure 3 est une vue en bout (carter enlevé), selon la flèche III-III de la figure 1, de l'autre extrémité (extrémité arrière) du dispositif.

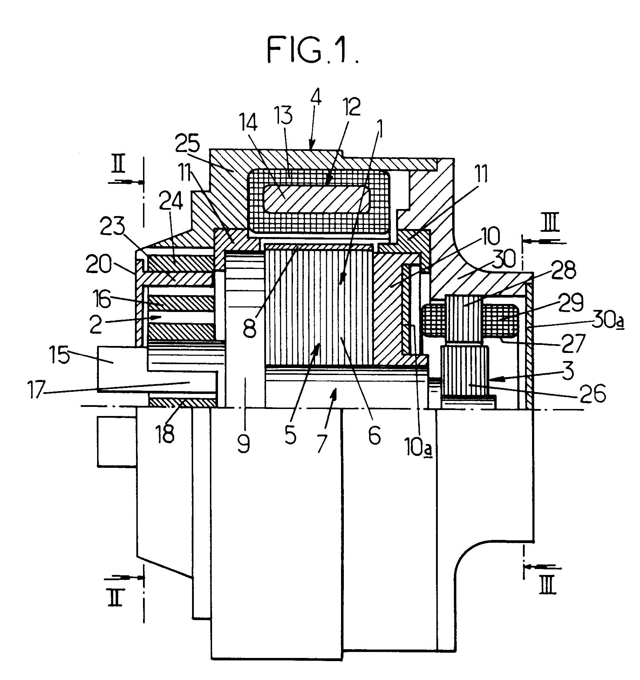

Comme visible tout particulièrement à la figure 1, le dispositif d'actionnement d'ailette conforme à l'invention comprend essentiellement un moteur électrique 1, disposé en position centrale, encadré d'un côté (côté avant) par un moteur mécanique 2 à ressort et du côté opposé (côté arrière) par un détecteur de position angulaire 3. L'ensemble est enfermé dans un carter désigné dans son ensemble par la référence 4.

Le moteur électrique 1 est un moteur sans collecteur, dont le rotor 5 comprend des aimants permanents 6 (par exemple quatre aimants écartés angulairement mutuellement de 90°), solidarisés à un arbre 7 et maintenus par une frette annulaire périphérique 8. Vers l'avant, les aimants 6 sont en appui contre une butée discoïdale 9 solidaire de l'arbre 7. Vers l'arrière, les aimants sont bloqués par une bague annulaire 10 emmanchée sur l'arbre 7 et constituée en un matériau amagnétique supportant un blindage magnétique 10a (par exemple en FₑNᵢ 50) isolant le détecteur de position angulaire 3 vis-à-vis du moteur.

L'arbre 7 est avantageusement constitué en alliage léger et dimensionné pour ne pas subir de déformations (torsion ou flexion).

Pour diminuer les pressions de contact sous, charge lors du départ de l'obus, le rotor 5 est monté sur des paliers lisses de grand diamètre 11, situés de part et d'autre du moteur et constitués en un matériau à très faible coefficient de frottement (bronze, matériau synthétique) et ne provoquant pas d'effet galvanique avec les matériaux des pièces avoisinantes. Les deux paliers 11 sont supportés par le carter 4 et coopèrent avec les faces de chants (parallèles à l'arbre 7) de la butée discoïdale 9, vers l'avant, et de la bague annulaire 10, vers l'arrière.

Les deux paliers 11 assurent également la retenue axiale du rotor 5. .

Le stator 12 du moteur, supporté par le carter 4, comprend un bobinage torique 13 à quatre pôles enroulé autour d'un noyau 14.

Le moteur électrique 1 a donc son rotor calé directement sur l'arbre 7 d'entraînement de l'ailette (non représentée), l'extrémité avant 15 de cet arbre étant agencée (forme en fourche) pour être accouplée à l'ailette. Toute rotation angulaire du rotor, aussi faible soit-elle, est ainsi intégralement transmise à l'ailette et il est possible d'assurer une commande très fine de l'ailette une fois celle-ci déployée, pour le guidage terminal de l'obus. On n'a pas représenté sur le dessin l'électronique de commande et d'asservissement, qui est raccordée notamment au moteur 1 et au détecteur de position angulaire 2, et qui est située extérieurement au dispositif d'actionnement.

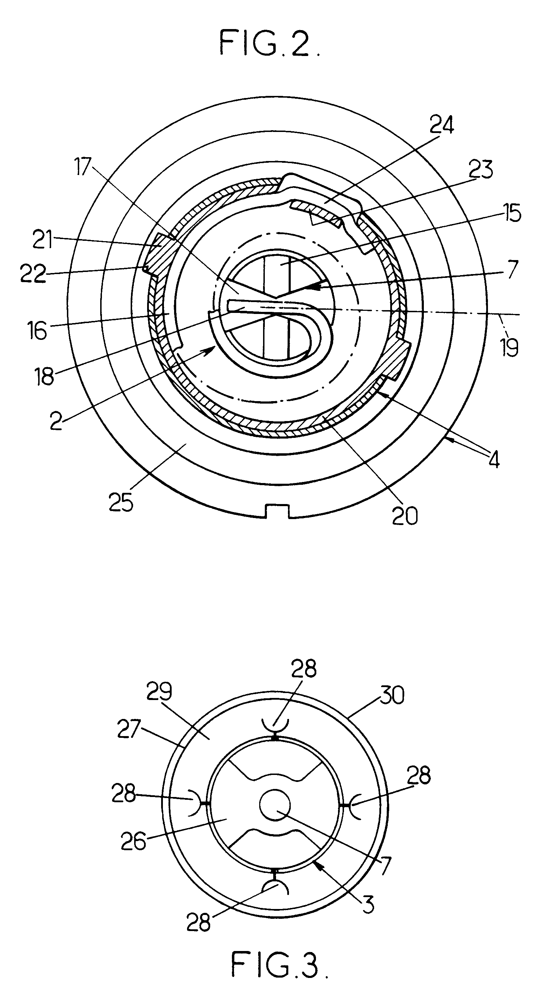

A l'avant du moteur électrique 1 est disposé le moteur mécanique 2 destiné au déploiement de l'ailette. Comme représenté aux figures 1 et 2, ce moteur mécanique 2 est constitué par un ressort spiral 16 enroulé autour de l'arbre 7, avec son extrémité intérieure liée à l'arbre 7 et son extrémité extérieure liée au carter 4 formant point fixe.

Pour recevoir l'extrémité du ressort 16, l'arbre 7 présente une fente diamétrale 17 évasée de part et d'autre de sa zone centrale ; autrement dit, les deux parois en regard définissant cette fente diamétrale 17 présentent chacune deux pentes convergeant, sensiblement en leur milieu, en direction de l'autre paroi à la manière d'un convergent-divergent. Ces deux parois forment entre elles un angle d'environ 45 à 60°. L'extrémité intérieure 18 du ressort 16 est repliée sur elle-même de manière que le ressort contourne l'arbre 7 par l'extérieur, puis pénètre dans la fente diamétrale 17 en s'étendant approximativement selon la bissectrice 19 de l'angle formé par les parois, lorsque le ressort n'est pas tendu. On constate que, grâce à cet agencement, l'arbre 7 dispose d'une relative liberté de mouvement en rotation par rapport au ressort 16, l'amplitude angulaire de cette liberté étant fonction de l'inclinaison mutuelle des parois définissant la fente diamétrale 17. Par ailleurs, l'accouplement mécanique en rotation du ressort à l'arbre, lorsque le ressort est bandé, est assuré par ces mêmes moyens.

A son extrémité extérieure, le ressort 16 est accouplé au carter 4 par tous moyens appropriés. Par exemple, comme visible à la figure 1, le carter 4 possède un capot frontal 20, amovible pour la mise en place du ressort sur l'extrémité de l'arbre. Ce capot 20, qui peut être positionné angulairement avec précision sur le carter 4 grâce à un ou deux doigts saillants 21 logés dans un ou deux évidements 22 du carter, présente un pion 23 parallèle à l'arbre 7 tandis que l'extrémité extérieure du ressort présente une ondulation 24 s'engageant autour du pion 23 pour assurer le blocage du ressort sur le capot 20, et donc sur le carter 4.

Le ressort 16 est constitué en un matériau résistant à l'oxydation et apte à conserver ses capacités élastiques au cours d'une période de stockage prolongée (10 à 15 ans) à l'état bandé.

La partie 25 du carter qui entoure le moteur électrique 1 et le moteur mécanique 2, ainsi qu'éventuellement le capot frontal 20 sont constitués en un matériau thermiquement bon conducteur et servent de dissipateur thermique ou radiateur pour évacuer la chaleur dégagée par le bobinage du stator. La chaleur est ainsi évacuée vers l'avant du dispositif, à l'opposé du détecteur de position angulaire qui ne subit pas d'influence thermique défavorable à son fonctionnement correct.

Enfin, le détecteur 3 de position angulaire de l'arbre 7, et donc de l'ailette, est disposé à l'arrière du moteur électrique 1. Il est du type sans contact, par exemple à transformateur rotatif différentiel variable avec calage du zéro (type dit RVDT). Comme visible aux figures 1 et 3, il comprend un rotor de détecteur 26 calé sur l'arbre 7, avec deux secteurs évasés diamétralement opposés, et un stator de détecteur 27 comportant quatre pôles statoriques 28 mutuellement espacés de 90° et un bobinage statorique 29.

Comme déjà précisé plus haut, le détecteur 3 est isolé magnétiquement du moteur 1 par le blindage magnétique 10a. En outre, la partie arrière 30 du carter 4 est constituée en un matériau amagnétique et supporte un écran de blindage magnétique 30a qui limite le rayonnement électro-magnétique du détecteur vers l'extérieur.

Le dispositif d'actionnement d'ailette conforme à l'invention présente une très grande fiabilité, supérieure à celle du dispositif antérieur, grâce au recours à un moteur électrique sans balais, en prise directe avec l'ailette (absence de contacts frottants, absence de réducteur, plus grande finesse de commande angulaire de l'ailette). Ce dispositif présente un gain de masse important par rapport au dispositif antérieur, notamment en raison de l'utilisation d'alliages légers rendue ici possible. L'élimination des organes fragiles permet au dispositif de subir sans dommage les efforts' élevés développés au moment du départ de l'obus. L'accouplement particulier entre l'arbre et le ressort, ainsi que la mise en prise directe du moteur électrique avec l'arbre conduisent à un élargissement de la bande passante permettant des débattements de faible amplitude de l'ailette et entraînent des performances dynamiques élevées. Enfin, le coût du dispositif est réduit par rapport au coût du dispositif antérieur.

## Revendications

1. Dispositif de déplacement d'une ailette d'un projectile, comportant :
- des moyens à ressort (2) pour déplacer l'ailette entre une position non fonctionnelle dans laquelle elle est repliée le long du projectile et une position fonctionnelle dans laquelle elle est déployée dans une position de référence,
- des moyens de motorisation électrique (1) pour faire tourner l'ailette autour d'un axe sensiblement perpendiculaire à la paroi du projectile, entre deux valeurs limites de part et d'autre de ladite position de référence, pour diriger le projectile,
caractérisé :
- en ce que les moyens de motorisation électrique (1) comprennent un moteur électrique sans collecteur dont le rotor (5) est accouplé directement à l'ailette,
- en ce que les moyens à ressort (2) comprennent un ressort spiral (16) dont les extrémités sont solidarisées, extérieurement, à la paroi d'un carter (4) entourant le dispositif et, intérieurement, au rotor (5) du moteur électrique, ledit ressort étant disposé en bout du rotor et approximativement coaxialement à celui-ci, et
- en ce que les moyens d'accouplement mécanique (2) entre l'extrémité intérieure du ressort (16) et le rotor (5) sont tels que le ressort bandé soit en mesure d'entraîner le rotor en rotation pour provoquer le déplacement de l'ailette entre sa position non fonctionnelle repliée et sa position fonctionnelle dépliée et que, une fois l'ailette dans sa position fonctionnelle de référence, le rotor soit libre, vis à vis du ressort, d'imprimer les déplacements angulaires souhaités à l'ailette.

2. Dispositif selon la revendication 1, caractérisé
- en ce que le rotor (5) possède un arbre de sortie (7) pour son accouplement à l'ailette,
- en ce que le ressort spiral (16) est enroulé autour de l'arbre (7) du rotor,
- en ce que cet arbre (7) possède une fente diamétrale (17) de réception de l'extrémité intérieure (18) du ressort spiral; et
- en ce que les deux parois en regard définissant cette' fente diamétrale présentent chacune deux pentes convergeant, sensiblement en leur milieu, en direction de l'autre paroi à la manière d'un convergent-divergent, l'angle d'inclinaison mutuel des parois opposées correspondant approximativement au débattement angulaire prévu pour l'ailette.

3. Dispositif selon la revendication 1 ou 2, caractérisé en ce que le rotor (5) du moteur est supporté en rotation par des paliers lisses (14) de grand diamètre situés aux deux extrémités dudit rotor.

4. Dispositif selon l'une quelconque des revendications 1 à 3, comportant en outre des moyens (3) détecteurs de la position angulaire du rotor du moteur, caractérisé en ce que lesdits moyens détecteurs (3) sont du type électromagnétique sans contact situés en juxtaposition au moteur du côté de celui-ci opposé au ressort spiral et sont munis d'un rotor (26) calé sur l'arbre (7) du moteur.

5. Dispositif selon la revendication 4, caractérisé en ce que le rotor du moteur comporte, du côté des moyens détecteurs de position (3), un blindage magnétique (10a) isolant magnétiquement les moyens détecteurs de position vis-à-vis du moteur électrique.

6. Dispositif selon la revendication 4 ou 5, comportant un carter (4), caractérisé en ce que la partie (30) du carter entourant les moyens détecteurs de position comporte un blindage magnétique (30a) pour limiter le rayonnement électromagnétique vers l'extérieur.

7. Dispositif selon l'une quelconque des revendications 1 à 6, comportant un carter (4), caractérisé en ce que la partie (25) du carter entourant le stator du moteur et le ressort est constituée en un matériau thermiquement bon conducteur et formant radiateur pour le refroidissement du moteur à l'opposé des moyens détecteurs de position.

## Patentansprüche

1. Vorrichtung zum Verschieben eines Leitflügels eines Geschosses mit:
- Federmitteln (2) zum Verschieben des Flügels zwischen einer Nichtfunktionsposition, in welcher er entlang des Geschosses zusammengefaltet ist, und einer Funktionsposition, in welcher er in einer Referenzposition auseinandergefaltet ist,
- elektrischen Antriebsmitteln (1) zum Drehenlassen des Flügels um eine zur Geschoßwandung genau rechtwinklige Achse zwischen zwei Werten, die beiderseits von der Referenzposition begrenzt werden, um das Geschoß zu dirigieren,
dadurch gekennzeichnet,
- daß die elektrischen Antriebsmittel (1) einen Elektromotor ohne Kollektor aufweisen, dessen Rotor (5) direkt mit dem Flügel gekoppelt ist,
- daß die Federmittel (2) eine Spiralfeder (16) aufweisen, deren Enden außerhalb an der Wand eines Gehäuses (4), welches die Vorrichtung umgibt, und innerhalb am Rotor (5) des Elektromotors befestigt sind, wobei die Feder am Ende des Rotors und ungefähr koaxial zu demselben angeordnet ist, und
- daß die mechanischen Kupplungsmittel (2) zwischen dem inneren Ende der Feder (16) und dem Rotor (5) derart ausgebildet sind, daß die gespannte Feder im Stande ist, den Rotor in Drehbewegung anzutreiben, um die Verschiebung des Flügels zwischen seiner zusammengefalteten Nichtfunktionsposition und seiner auseinandergefalteten Funktionsposition zu bewirken, und daß, nachdem der Flügel sich einmal in seiner Funktionsreferenzposition befindet, der Rotor frei ist gegenüber der Feder, um dem Flügel die gewünschten Verschiebungen aufzuprägen.

2. Vorrichtung nach Anspruch 1,
dadurch gekennzeichnet,
- daß der Rotor (5) eine Ausgangswelle (7) für seine Ankupplung am Flügel aufweist,
- daß die Spiralfeder (16) um die Welle (7) des Rotors aufgewickelt ist,
- daß diese Welle (7) einen diametralen Spalt (17) zur Aufnahme des inneren Endes (18) der Spiralfeder besitzt, und
- daß die beiden gegenüberliegenden Wände diesen diametralen Spalt begrenzen und jeweils zwei Neigungen aufweisen, die genau in ihrem Mittelpunkt in Richtung zur anderen Wand in konvergenter-divergenter Weise konvergieren, wobei der gegenseitige Neigungswinkel der gegenüberliegenden Wände ungefähr der für den Flügel vorgesehenen winkelförmigen Auslenkung entspricht.

3. Vorrichtung nach Anspruch 1 oder 2,
dadurch gekennzeichnet,
daß der Rotor (5) des Motors von zwei Gleitlagern (14) mit großem Durchmesser drehbar gelagert ist, welche an den beiden Enden des Rotors angeordnet sind.

4. Vorrichtung nach irgendeinem der Ansprüche 1 bis 3, welche außerdem Detektormittel (3) zur Erkennung der Winkelposition des Rotors des Motors aufweist,
dadurch gekennzeichnet,
daß die Detektormittel (3) elektromagnetische Detektormittel ohne Kontakt sind, welche neben dem Motor benachbart zum selben und gegenüberliegend zur Spiralfeder angeordnet sind und mit einem Rotor (26) versehen sind, der auf der Welle (7) des Motors befestigt ist.

5. Vorrichtung nach Anspruch 4,
dadurch gekennzeichnet,
daß der Rotor des Motors neben den Detektormitteln (3) zur Positionsbestimmung eine magnetische Abschirmung (10a) aufweist, welche die Detektormittel zur Positionsbestimmung gegenüber dem Elektromotor isoliert.

6. Vorrichtung nach Anspruch 4 oder 5 mit einem Gehäuse (4),
dadurch gekennzeichnet,
daß der die Detektormittel zur Positionsbestimmung umgebende Bereich (30) des Gehäuses eine magnetische Abschirmung (30**a**) zur Begrenzung der elektromagnetischen Strahlung gegenüber dem Äußeren aufweist.

7. Vorrichtung nach irgendeinem der Ansprüche 1 bis 6 mit einem Gehäuse (4),
dadurch gekennzeichnet,
daß der den Stator des Motors und die Feder umgebende Bereich (25) des Gehäuses aus einem thermischen, gut leitenden Material besteht und einen Wärmeaustauscher zur Kühlung des Motors gegenüberliegend zu den Detektormitteln zur Positionsbestimmung bildet.

## Claims

1. A device for moving a fin of a missile, comprising:
- spring means (2) for moving the fin between a non-functional position in which it is retracted along the projectile and a functional position in which it is extended into a reference position,
- electric motorisation means (1) for turning the fin about an axis substantially perpendicular to the missile wall, between two limiting values on either side of the said reference position for the purpose of guiding the missile,
characterised
- in that the electric motorisation means (1) comprise an electric motor without a commutator, the rotor (5) of which is directly coupled to the fin,
- in that the spring means (2) comprise a spiral spring (16), the ends of which are connected, externally, to the wall of a casing (4) surrounding the device and, internally, to the rotor (5) of the electric motor, said spring being disposed at the end of the rotor and approximately coaxially thereto, and
- in that the mechanical coupling means (2) between the inner end of the spring (16) and the rotor (5) are such that the tensioned spring is capable of driving the rotor in rotation to cause displacement of the fin between its non-functional retracted position and its functional extended position and, once the fin is its functional reference position, the rotor is free, relatively to the spring, to impart the required angular displacements to the fin.

2. A device according to claim 1, characterised
- in that the rotor (5) has an output shaft (7) for coupling it to the fin,
- in that the spiral spring (16) is wound around the rotor shaft (7),
- in that said shaft (7) has a diametric slot (17) to receive the inner end (18) of the spiral spring; and
- in that the two facing walls defining said diametric slot each have two slopes converging, substantially in their middle, in the direction of the other wall after the style of a venturi nozzle, the mutual angle of inclination of the opposite walls corresponding approximately to the angular deflection provided for the fin.

3. A device according to claim 1 or 2, characterised in that the rotor (5) of the motor is supported in rotation by large-diameter plain bearings (14) situated at the two ends of the said rotor.

4. A device according to any one of claims 1 to 3, also comprising means (3) for detecting the angular position of the motor rotor, characterised in that the said detector means (3) are of the contactless electromagnetic type situated in juxtaposition to the motor on the side thereof remote from the spiral spring and are provided with a rotor (26) keyed on the motor shaft (7).

5. A device according to claim 4, characterised in that the motor rotor comprises, on the side of the position detector means (3), a magnetic shielding (10a) which magnetically insulates the position detector means from the electric motor.

6. A device according to claim 4 or 5, comprising a casing (4), characterised in that that part (30) of the casing which surrounds the position detector means comprises a magnetic shielding (30a) to limit the electromagnetic radiation to the exterior.

7. A device according to any one of claims 1 to 6, comprising a casing (4), characterised in that that part (25) of the casing which surrounds the motor stator and the spring is made of a material which is a good thermal conductor and forms a radiator for cooling the motor remote from the position detector means.
